# EUROPEAN PATENT APPLICATION

(11) **EP 2 827 248 A1**
(43) Date of publication of application: **21.01.2015**
(21) Application number: 14177143.6
(22) Date of filing: 15.07.2014
(51) Int. Cl.: G06F 9/54, G06F 17/30

(54) **Information processing terminal and control method therefor**

(30) Priority: 18.07.2013 JP 2013149570
(71) Applicant: CANON KABUSHIKI KAISHA, Ohta-ku Tokyo 146-8501 (JP)
(72) Inventor: Kawana, Yoshimasa, Ohta-ku, Tokyo (JP)
(74) Representative: Garner, Jonathan Charles Stapleton

(57) **Abstract**

An information processing terminal having a relay function for relaying a client and a service includes a storage means configured to receive designation from registered function information and to create and store a request to the service of a function corresponding to the designation of function information, a second receiving means configured to receive designation of at least any of a determination condition for determining data to be a target of a function provided by the service and an issuance condition for issuing a request to the service, and an issuance means configured to issue the stored request according to designation of the condition received by the second receiving means.

## Description

### BACKGROUND OF THE INVENTION

### Field of the Invention

The present invention relates to a control method for associating a service that provides content information via a network with a service that receives contents to execute processing, and a storage medium therefor.

### Description of the Related Art

Conventionally, in a case where processing is delegated between websites, it has been necessary for a caller of a function to know how to call a function of an application programming interface (API) or a representational state transfer (REST) interface of a provider of the function. Accordingly, in order to realize the cooperation between different websites, the caller of the function has to execute processing on the caller side according to respective calling conventions. Further, in many cases, the caller of the function has to be authenticated by the provider of the function in order to use the function. Therefore, the user (caller) of the function has to hold authentication information of the provider of the function, or to use an authentication infrastructure, such as a security assertion markup language (SAML). However, if the user of the function holds the authentication information, the authentication information has to be managed properly and safely. Further, in order to use the authentication infrastructure, such as the SAML, the provider and the user of the function have to make an agreement in advance, and thus, this may result in placing a burden on the user of the function. Japanese Patent Application Laid-Open No. 2009-199369 discusses the conventional technique for using a service provided by a website.

Further, a system for performing cooperation between a receiver and an optional web service (or web application) without using a dedicated API is also known. For example, there is provided a system known as Web Intents which realizes cooperation between a receiver and a provider of a service by loosely coupling the receiver and the provider through run-time delayed binding.

In the above-described new cooperation system of web service, such as Web Intents, in particular, a caller of a service has to prepare contents in advance before using the service and has to issue a request to a service provider according to an instruction of a user at each timing the caller uses the service. In other words, an instruction from the user is considered as indispensable for the new cooperation system of the web service. Thus, the system thereof may be less flexible in terms of use of the service.

### SUMMARY OF THE INVENTION

Therefore, with respect to a currently-provided new cooperation system, such as Web Intents, the present invention is directed to a technique realizing a flexible modification on calling a service to improve usability thereof.

According to a first aspect of the present invention, there is provided an information processing terminal as specified in claims 1 to 9. According to a second aspect of the present invention, there is provided a method for an information processing terminal as specified in claims 10 to 16. According to a third aspect of the present invention, there is provided a computer executable program for executing a method for an information processing terminal as specified in claim 17. According to a forth aspect of the present invention, there is provided a computer readable storage medium for storing a computer executable program for executing a method for an information processing terminal as specified in claim 18.

Further features of the present invention will become apparent from the following description of exemplary embodiments (with reference to the attached drawings).

### BRIEF DESCRIPTION OF THE DRAWINGS

Fig. 1 is a conceptual diagram illustrating a system according to an exemplary embodiment.
Fig. 2 is a sequence diagram illustrating an outline of an operation of Web Intents.
Fig. 3 is a diagram illustrating an example of an intent tag for registering a function of Web Intents.
Fig. 4 is a diagram illustrating an example of an ECMAScript for activating Web Intents.
Fig. 5 is a diagram illustrating an example of a network configuration according to an exemplary embodiment.
Fig. 6 is a block diagram illustrating a hardware configuration of a printer.
Fig. 7 is a block diagram illustrating a hardware configuration of a wireless local area network (LAN) terminal.
Fig. 8 is a diagram illustrating an example of a hardware configuration of an information processing terminal.
Fig. 9 is a diagram illustrating an example of a software module configuration of the information processing terminal.
Fig. 10 is a sequence diagram specifically illustrating a flow of processing according to a first exemplary embodiment.
Fig. 11 is a diagram illustrating an example of hypertext markup language (HTML) information including service information of Web Intents.
Fig. 12 is a diagram illustrating an example of an ECMAScript for activating Web Intents according to the first exemplary embodiment.
Fig. 13 is a diagram illustrating an example of a user agent (UA) screen for registering Web Intents according to the first exemplary embodiment.
Figs. 14A through 14C are diagrams each illustrating an example of the UA screen when a Web Intents request is issued according to the first exemplary embodiment.
Fig. 15 is a flowchart illustrating processing of the information processing terminal according to the first exemplary embodiment.
Fig. 16 is a sequence diagram specifically illustrating a flow of processing according to a second exemplary embodiment.
Fig. 17 is a diagram illustrating an example of an ECMAScript for activating Web Intents according to the second exemplary embodiment.
Figs. 18A through 18D are diagrams each illustrating an example of a display screen displayed on the information processing terminal according to the second exemplary embodiment.

### DESCRIPTION OF THE EMBODIMENTS

Various exemplary embodiments, features, and aspects of the invention will be described in detail below with reference to the drawings.

### <Basic Conceptual Diagram for System According to Present Invention>

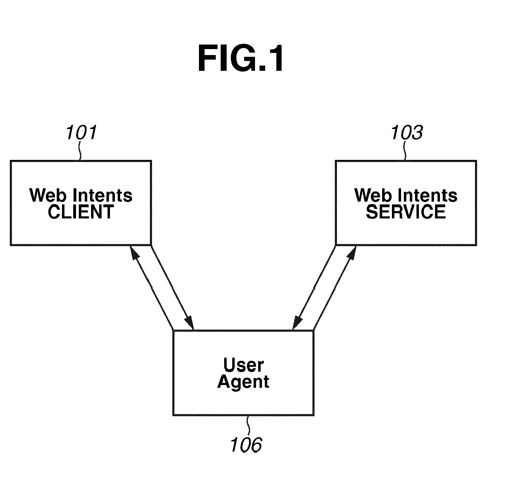

Fig. 1 is a diagram illustrating an entire configuration of Web Intents as an example of a system for performing cooperation between a receiver and an optional web service (or web application) without using a dedicated API.

A Web Intents service (hereinafter, referred to as "service") 103 provides a service or a function by using a Web Intents technique. A Web Intents client (hereinafter, referred to as "client") 101 uses the service. A user agent (UA) 106 performs a relay function for relaying a request from the client 101 to the service 103 and relaying a result from the service 103 to the client 101.

The UA 106 can be also realized by an operating system (OS) or an application operating on an information processing terminal instead of a browser, as long as the OS or the application includes the below-described relaying function which allows the service 103 and the client 101 to cooperate with each other in terms of the service. A personal computer, a smartphone, a tablet, or a car navigation system can be given as an example of the information processing terminal.

With respect to the service 103, for example, a device, such as a camera, a printer, or a scanner, built into the information processing terminal can also serve as the service provider in addition to the above-described service provider on the internet, such as a posting service. Furthermore, with respect to the service 103, a peripheral device, such as a printer, a scanner, or a network camera, connected through a network, or a home electrical appliance, such as a refrigerator or a television, can also serve as the service provider. Likewise, with respect to the client 101, a variety of devices or applications built into the information processing terminal, peripheral devices or home electrical appliances on the network, or programs operating thereon can also serve as the user which calls the service.

An optional combination of the client 101, the UA 106, and the service 103 may operate in the same system. Specifically, a text editing application which includes a function equivalent to the web browser may operate as a configuration including the client 101 and the UA 106.

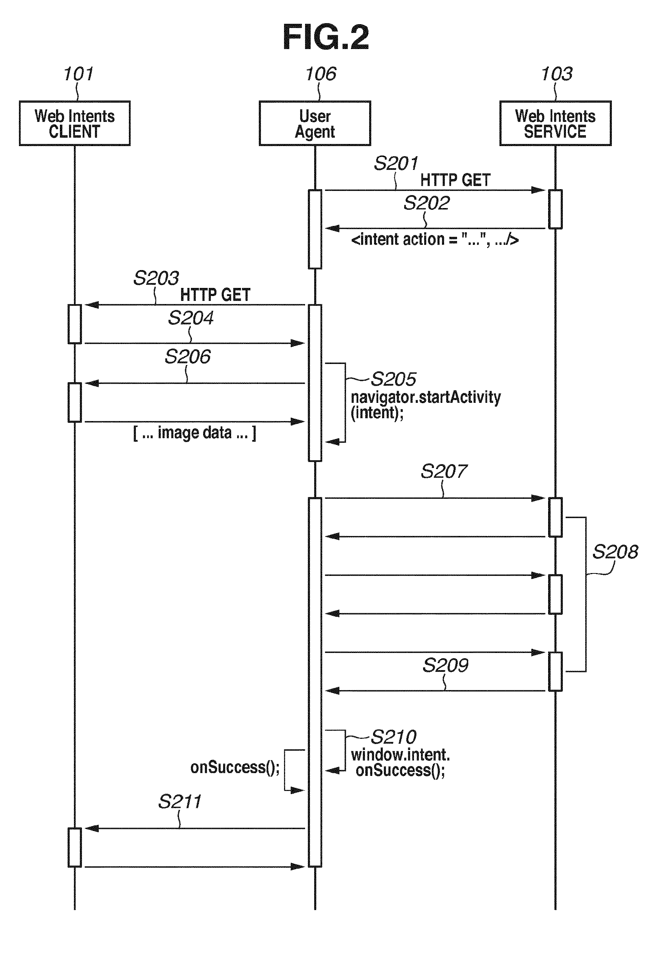

Fig. 2 is a sequence diagram illustrating a basic operation for providing a service by using Web Intents.

In step S201, the UA 106 accesses the service 103 according to the operation of the user. In step S202, the service 103 returns the UA 106 an HTML response including a registration markup so that the provided service is registered on the UA 106.

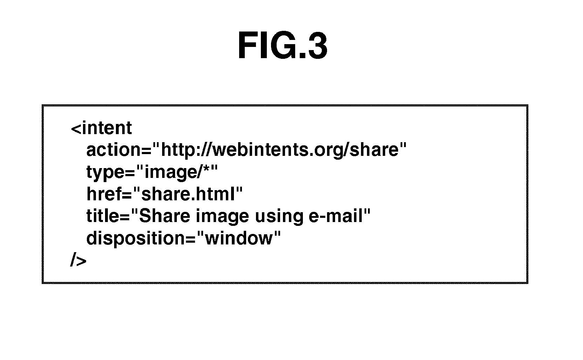

The content of an HTML document returned to the UA 106 from the service 103 will be described with reference to an example illustrated in Fig. 3. Function information (service information) for specifying a provided function is described on a tag <intent>. A category of the provided function is indicated by "action", and a type of data processible by the provided function is indicated by "type". A connection destination (uniform resource locator (URL)) of the provided function is indicated by "href", and a title of the provided function is indicated by "title". Further, a display mode for the called provided function is indicated by "disposition".

In the tag <intent> illustrated in Fig. 3, the category of the provided function is "share", the type of processible data is "image data in any format (*)", the connection destination is "share.html", and the title is "Share image using e-mail". In addition, in the tag <intent> illustrated in Fig.3, it is described that the provided function is displayed on a separate window via the UA 106.

When the UA 106 receives the response in step S202, the UA 106 confirms with a user whether to register the provided function of the service 103 on the UA 106. For example, if the UA 106 is a web browser, the UA 106 displays a pop-up window to prompt the user to select whether or not to register the provided function. In a case where the user selects to register the provided function as Web Intents, the UA 106 internally stores the function information received in step S202. Specifically, the function information is stored in a storage region of the information processing terminal on which the UA 106 operates, so as to be registered on the UA 106 as Web Intents.

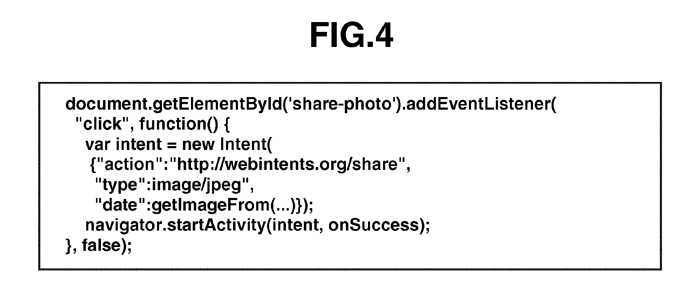

In step S203, the UA 106 accesses the client 101 according to the operation of the user. In step S204, the client 101 returns an HTML document, which describes that the client 101 uses the provided function of the service 103 (Web Intents), to the UA 106. For example, in a case where a website serving as the client 101 displays a "share" button with an image, the website returns the HTML document including the ECMAScript illustrated in Fig. 4 to the UA 106.

The content of the HTML document returned to the UA 106 from the client 101 will be described below with reference to an example illustrated in Fig. 4. The ECMAScript describes that a designated unnamed function is executed when a button having an identification (ID) of "share-photo" in the HTML document is clicked. In the execution of the designated unnamed function, a new Intent object is generated to call a function "startActivity ()" by making the new Intent object as an argument. By executing this function, from among Web Intents registered on the UA 106, the UA 106 extracts Web Intents of which "action" and "type" matches with those of the specified Intent object, and requests the user to make a selection by displaying a list of extracted Web Intents. Further, the UA 106 acquires image data stored in the client 101 by executing a function "getImageFrom ()" called by the unnamed function.

In step S204, the UA 106 receives the HTML document from the client 101 and displays the HTML document. In step S205, when the UA 106 detects that the user has pressed the "share" button on the display screen, the UA 106 executes the ECMAScript for activating Web Intents as described above. In step S206, the UA 106 acquires image data stored in the client 101. Further, in step S205, when the UA 106 detects that the "share" button is pressed, the UA 106 displays a list of Web Intents corresponding to the function information registered on the UA 106. When the UA 106 detects that the user selects Web Intents indicating the provided function of the service 103 from the list, in step S207, the UA 106 transmits a hypertext transfer protocol (HTTP) request to the selected service 103. At the transmission, the UA 106 includes content of the Intent object created by the ECMAScript illustrated in Fig. 4 in transmission data.

In step S208, the service 103 extracts the Intent object from the HTTP request to realize use of the selected provided function (in this example, "share" the image data of the client 101) by interacting with the user via the UA 106.

When the above processing has been completed, in step S209, the service 103 returns a response including the ECMAScript for notifying the client 101 of a processing result. In step S210, the UA 106 executes the ECMAScript included in the response, and calls a call-back function "onSuccess ()" designated by the argument of the function "startActivity ()" of step S205. In step S211, the UA 106 returns a processing result to the client 101 by the call-back function "onSuccess ()".

An example of using a web mail function through the sequence illustrated in Fig. 2 will be described. The user visits a site providing a call button of Web Intents for a web storage (client 101) which manages photograph data. Then, the user presses the call button, so that the web browser (UA 106) displays a pop-up window including a list of registered services. When the user selects a web mail function from the pop-up window, a site providing the web mail function is displayed on another window. A new mail having the photograph data attached thereto is created on the window as a processing result.

Through the above-described processing, the client 101 can call the Web Intents function (in this example, "share" the image) provided by the service 103 via the UA 106.

### <Configuration Example of Network, Peripheral Device, and Network Service According to Present Exemplary Embodiment>

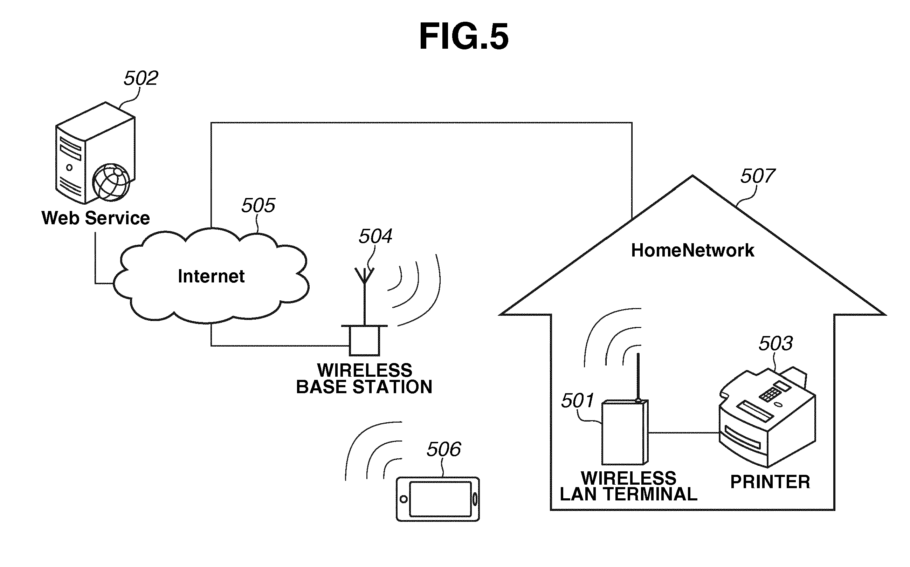

Fig. 5 is a diagram illustrating a connection relationship between the information processing terminal according to the present exemplary embodiment, a wireless LAN terminal, a printer, and a web Service in a network.

Referring to Fig. 5, an information processing terminal 506 is a smartphone having a function of the UA 106 illustrated in Fig. 1. A web browser is installed in the information processing terminal 506, so that the information processing terminal 506 can use various services by accessing a wireless network provided by a wireless LAN or an outdoor mobile data communication carrier (hereinafter, referred to as "mobile carrier").

A wireless LAN terminal 501 and a printer 503 are illustrated in Fig. 5 as the devices existing in a home network 507. The wireless LAN terminal 501 is a wireless LAN base unit having a general network router function, and provides a wireless LAN in a household or an office. The home network 507 represents both a wireless LAN and a wired LAN, and also represents the network provided by the wireless LAN terminal 501. When the information processing terminal 506 enters a wireless LAN area of the home network 507, the information processing terminal 506 automatically participates in the network by using previously set authentication information. The printer 503 participates in the home network 507 via the wired or wireless LAN. The wireless LAN terminal 501 can access all of the peripheral devices and services participating in the network of the home network 507.

According to the present exemplary embodiment, the wireless LAN terminal 501 includes a function of the client 101 illustrated in Fig. 1. However, the device that provides the client function on the home network 507 is not limited to the wireless LAN terminal 501. In other words, any device participating in the home network 507 may provide a function as the Web Intents client 101.

The printer 503 prints out image information received through the network. In general, the printer 503 receives a printing request by using a protocol for printing, such as "lpr". However, the printer 503 can also receive a printing request by using a system of Web Intents by functioning as a Web Intents service 103. Further, in addition to the printing function, the printer 503 can also receive a device control instruction, such as "power ON" or "power OFF", as a request using the system of Web Intents. According to the present exemplary embodiment, the printer 503 corresponds to the Web Intents service 103 illustrated in Fig. 1.

In addition, the network configuration illustrated in Fig. 5 also includes a wireless base station 504. The wireless base station 504 serves as a base station of a wireless communication provided by the mobile carrier. The information processing terminal 506 participates in the network provided by the wireless base station 504 when the information processing terminal 506 moves out from the wireless LAN area of the home network 507. A web Service 502 provides a service on an internet 505.

The information processing terminal 506 can access the web service 502 by accessing the internet 505 via the network provided by the wireless base station 504. Further, the home network 507 is also connected to the internet 505 via a router, such as the wireless LAN terminal 501. The web service 502 provides photo service for sharing data, such as photographic data, by using the system of Web Intents. In a same way as the printer 503, the web service 502 also corresponds to the service 103 illustrated in Fig. 1.

As described below, in the present exemplary embodiment, it is assumed that the user uses a Web Intents request in order to turn on the power of the printer 503 when the user comes home from the outside.

First, the user registers a Web Intents service on the information processing terminal 506. In order to execute registration, the user accesses the printer 503 via the home network 507 by using a web browser functioning as the UA of the information processing terminal 506. Then, the web browser recognizes the Web Intents service from a tag <intent> included in a web page provided by the printer 503, and registers the information of the Web Intents service according to an instruction of the user. Specifically, the registration of the Web Intents service on the UA is realized by storing information of the Web Intents service in an available storage region of the web browser functioning as the UA.

Next, the user creates a Web Intents request on the web browser of the information processing terminal 506. The user accesses the wireless LAN terminal 501 by using the web browser. The wireless LAN terminal 501 operates as the Web Intents client, and a "power ON" button is disposed on a web page provided thereby. When the user presses the "power ON" button on the web page, the web browser functioning as the UA shifts to a screen with a list of Web Intents services where the user can input an issuance condition of the Web Intents service. On the screen, the printer 503 registered previously is displayed as the Web Intents service as a target for receiving the "power ON" action. On this screen, the user also sets an issuance destination and an issuance condition of the Web Intents request. Various conditions, such as change in a participating network, global positioning system (GPS) information, or time information, can be set as the issuance condition. The information processing terminal 506 holds the execution of the Web Intents request in the background until the issuance condition of the Web Intents request is detected.

In addition to the above-described web browser, an operating system (OS) operating on the information processing terminal 506 may also serve as the UA which executes the Web Intents request according to detection of the issuance condition.

### <Example of Hardware Configuration of Printer According to Present Exemplary Embodiment>

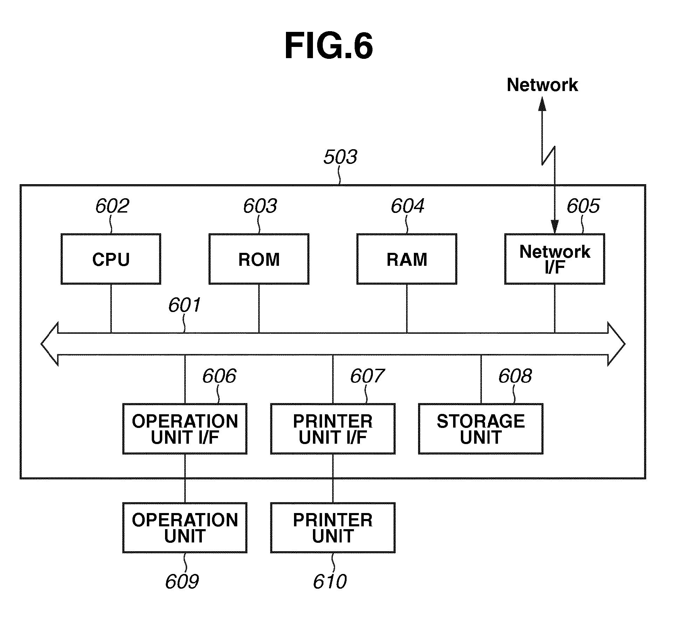

Fig. 6 is a block diagram illustrating a hardware configuration of the printer 503 illustrated in Fig. 5.

A control unit of the printer 503 processes a Web Intents service application program in addition to a control program relating to printing processing. The printer 503 executes processing for receiving a power ON/OFF request and other requests, such as printing requests, for the printer 503 through the Web Intents service application program. Processing according to the request will be executed on the received request by the Web Intents service application program.

Each of the constituent elements of the hardware is connected to a system bus 601. A control program of the printer 503 and the Web Intents service application program are stored in a read only memory (ROM) 603. The programs are executed by a central processing unit (CPU) 602. A random access memory (RAM) 604 serves as a work memory area for executing the programs, and also serves as a memory for temporarily storing image data at a time of receiving the print request, or data for controlling the printer 503, such as authentication information of the Web Intents service. A storage unit 608 is a non-volatile storage device for storing various operation mode settings and an operation log which are necessary to be saved even after restarting the printer 503.

A network interface (I/F) 605 serves as an interface unit for connecting to the home network 507. The printer 503 communicates with a control device of the information processing terminal 506 or a personal computer (PC) via the network I/F 605. A connection mode of the network I/F 605 can be either the wireless LAN or the wired LAN.

An operation unit I/F 606 provides information that is input to and output from the operation unit 609 to the control program, and provides the user with a control means of the printer 503. The above-described control is executed by the printer control program operating on the CPU 602. The user provides various setting instructions and a start/stop instruction of the printer 503 via the operation unit 609.

A printer unit I/F 607 serves as an intermediary between a printer unit 610 and the printer control program, and executes synchronous/non-synchronous conversion of image data. For example, output image data is corrected, processed and edited by the printer control program executed by the CPU 602. Further, the printer control program executes rotation processing of image data and compress/decompress processing of images in various formats, such as a joint photographic experts group (JPEG), a joint bi-level image experts group (JBIG), a modified-modified read (MMR), a modified read (MR), and a modified huffman (MH). The printer unit I/F 607 provides these processing results to the printer unit 610, so that the printer unit 610 prints the images desired by the user.

### <Example of Hardware Configuration of Wireless LAN Terminal According to Present Exemplary Embodiment>

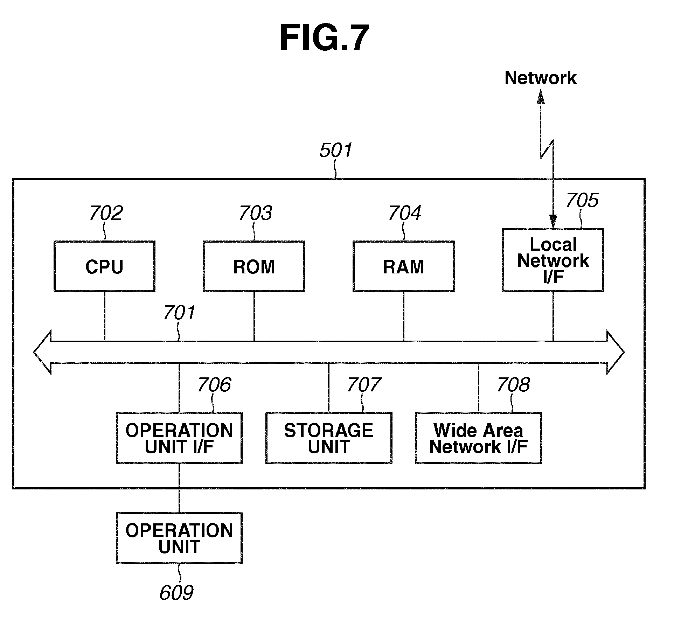

Fig. 7 is a block diagram illustrating a hardware configuration of the wireless LAN terminal 501 illustrated in Fig. 5.

A control unit of the wireless LAN terminal 501 processes a Web Intents client application program in addition to a program for controlling the home network 507. The wireless LAN terminal 501 executes processing for issuing a power ON/OFF request and other control requests to network devices existing in the home network 507 by the Web Intents client application program. The control requests for each device may be control requests of heating, cooling, temperature setting, and air volume setting to an air conditioner, or control requests of channel setting, sound volume setting, and reproduction of transferred moving image data to a television.

Each of the constituent elements of the hardware is connected to a system bus 701. A control program of the wireless LAN terminal 501, a network control program for managing the home network 507, and a web service program for controlling the Web Intents client 101 are stored in a ROM 703. These control programs are executed by a CPU 702. A RAM 704 serves as a work memory for executing the programs. The RAM 704 also serves as a memory for temporarily storing information, such as a routing table of the network managed by the wireless LAN terminal 501, media access control (MAC) address information of the peripheral devices connected thereto, and request information of the Web Intents client supporting each peripheral device. A storage unit 707 is a non-volatile storage unit for storing various operation mode settings and an operation log to be saved after restarting the wireless LAN terminal 501.

A local network I/F 705 serves as an interface unit for connecting to the home network 507. A wide area network I/F 708 serves as an interface unit for connecting to the internet 505. When the information processing terminal 506 executes communication in the home network 507 via the wireless LAN, the information processing terminal 506 executes communication via the local network I/F 705. Further, a device, such as a PC participating in the home network 507, communicates with a service on the internet 505 via the local network I/F 705 and the wide area network I/F 708. During the communication, the network control program determines whether the request received from the local network is to be sent to the external network or the internal network by using a routing table of the network, and performs control for sending a packet to the appropriate I/F.

An operation unit I/F 706 provides information input to and output from the operation unit 709 to the control program, and provides the user with a control means for the network settings. The above-described control is executed by the network control program operating on the CPU 702. The user provides various setting instructions and a start/stop instruction relating to the home network 507 via the operation unit 709.

Further, the setting instruction of the wireless LAN terminal 501 is also supplied from the web service provided by the wireless LAN terminal 501 via the local network I/F 705.

### <Example of Hardware Configuration of Information Processing Terminal 506 According to Present Exemplary Embodiment>

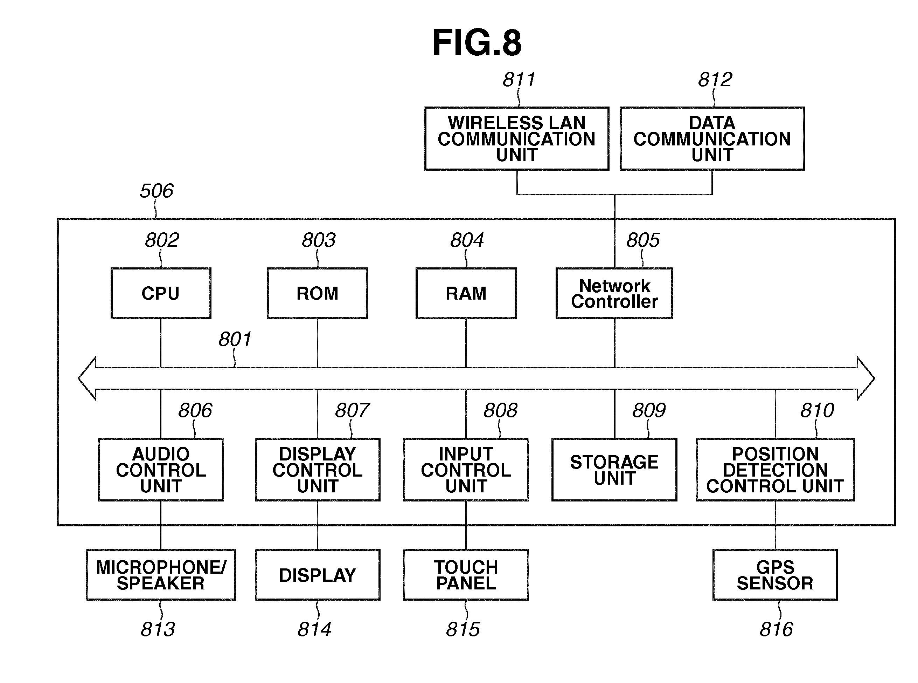

Fig. 8 is a block diagram illustrating a hardware configuration of the information processing terminal 506 illustrated in Fig. 5.

The information processing terminal 506 may be a smartphone, for example, and an operating system for a compact size terminal and programs for controlling a telephone call and a data communication operate thereon. Each of the constituent elements of the hardware is connected to a system bus 801. An operating system of the information processing terminal 506 and applications for controlling the telephone call and the data communication are stored in a ROM 803 so as to be executed by a CPU 802. Mail software or a web browser can be given as an example of the application for controlling the data communication.

A ROM 804 serves as a work memory area for executing the programs. Further, the RAM 804 also serves as a memory for temporarily storing web page data and authentication information for accessing a web service acquired from the web server by the web browser. A storage unit 809 is a non-volatile storage device for storing various operation mode settings and an operation log to be saved even after restarting the information processing terminal 506.

A network controller 805 executes communication control of a wireless LAN communication unit 811 for participating in the wireless LAN of the home network 507 and a data communication unit 812 for participating in the network provided by the mobile carrier. Generally, when the information processing terminal 506 can participate in the wireless LAN network, the network controller 805 prioritizes the wireless LAN connection. In a case where the information processing terminal 506 moves out of the wireless LAN network area, the information processing terminal 506 participates in the wireless communication network provided by the mobile carrier.

An audio control unit 806 is mainly employed when a telephone application is activated and the user is on the phone. Audio data is input to and output from a microphone/speaker 813, and the audio control unit 806 serves as an intermediary between the microphone/speaker 813 and the control program thereof. A display control unit 807 controls information output through a display 814 of the information processing terminal 506. An input control unit 808 controls information instructed by the user through buttons or a touch panel 815 of the information processing terminal 506. By using the audio control unit 806, the display control unit 807, and the input control unit 808, the application operating on the information processing terminal 506 provides the user with network communication information and various kinds of information of the information processing terminal 506. A position detection control unit 810 acquires positional information of the information processing terminal 506 from a GPS sensor 816, and provides the positional information to the operating system. The above-described control processing is executed by the operating system operating on the CPU 802.

### <Example of Software Configuration of Device According to Present Exemplary Embodiment>

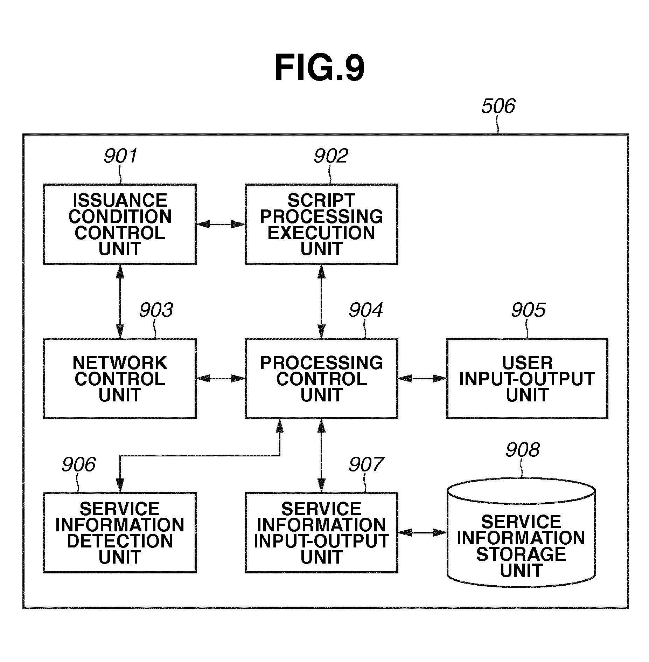

Fig. 9 is a block diagram illustrating an example of a software module configuration of the information processing terminal 506 illustrated in Fig. 5. Description will be given to an example of the module configuration mainly functioning as the UA, which is realized by executing the control program as an aspect of the present invention.

A user input-output unit 905 corresponds to the audio control unit 806, the microphone/speaker 813, the display control unit 807, the display 814, the input control unit 808, and the touch panel 815 illustrated in Fig. 8. The user can operate the information processing terminal 506 through the user input-output unit 905. For example, the user executes operations of activating a browser, browsing a web page, and instructing the issuance of Web Intents request through the user input-output unit 905.

A processing control unit 904 represents a function provided by the web browser program (hereinafter, referred to as "browser"). Because the processing control unit 904 is a program functioning as the UA for executing the Web Intents processing, the OS may operate as the processing control unit 904. When the user operates the browser via the user input-output unit 905, the processing control unit 904 executes various kinds of processing by receiving the operation requests.

A network control unit 903 of the information processing terminal 506 corresponds to a functional module of the network controller 805 illustrated in Fig. 8.

The information processing terminal 506 also includes a service information detection unit 906. When the user accesses the peripheral device or the server on the network providing the Web Intents service by using the browser, the service information illustrated in Fig. 3 is included in received HTML information. When the service information corresponding to Web Intents is included in the HTML information, the service information detection unit 906 detects the Web Intents service. Then, the service information detection unit 906 associates the URL of the server and the information of corresponding action and type with each other, and notifies the processing control unit 904 of the Web Intents service.

The information processing terminal 506 also includes a service information input-output unit 907 and a service information storage unit 908. When the service information detection unit 906 detects the Web Intents service and notifies the processing control unit 904 of the Web Intents service, the processing control unit 904 sends a storage request to the service information input-output unit 907. Upon receiving the storage request, the service information input-output unit 907 registers the Web Intents service information on the service information storage unit 908.

The information processing terminal 506 further includes a script processing execution unit 902. When the user accesses the Web Intents client by using the browser, the script processing execution unit 902 receives the HTML information including the ECMAScript information illustrated in Fig. 4. Then, the user is provided with the Web Intents client information via the user input-output unit 905.

In a case where the user sends a "sharing" instruction to the Web Intents client, for example, the script processing execution unit 902 executes the ECMAScript. Then, the script processing execution unit 902 notifies the processing control unit 904 of "action" and "type" described in the ECMAScript. Then, the processing control unit 904 issues a service information acquisition request to the service information input-output unit 907. Upon receiving the service information acquisition request, the service information input-output unit 907 acquires one or more Web Intents services registered on the service information storage unit 908 and transmits the acquired Web Intents services to the processing control unit 904. The user selects a Web Intents service the user would like to request from among the one or more Web Intents services.

Further, in the above-described operation, in a case where an issuance condition of the Web Intents request is to be designated, an issuance condition control unit 901 sends an instruction by adding the issuance condition of the Web Intents request via the user input-output unit 905. When the script processing execution unit 902 receives the Web Intents request together with the issuance condition from the user, the script processing execution unit 902 notifies the issuance condition control unit 901 of the Web Intents request together with the issuance condition thereof. In a case where network information, a position, or a time received from the operating system or a sensor satisfies the issuance condition, the issuance condition control unit 901 issues the Web Intents request.

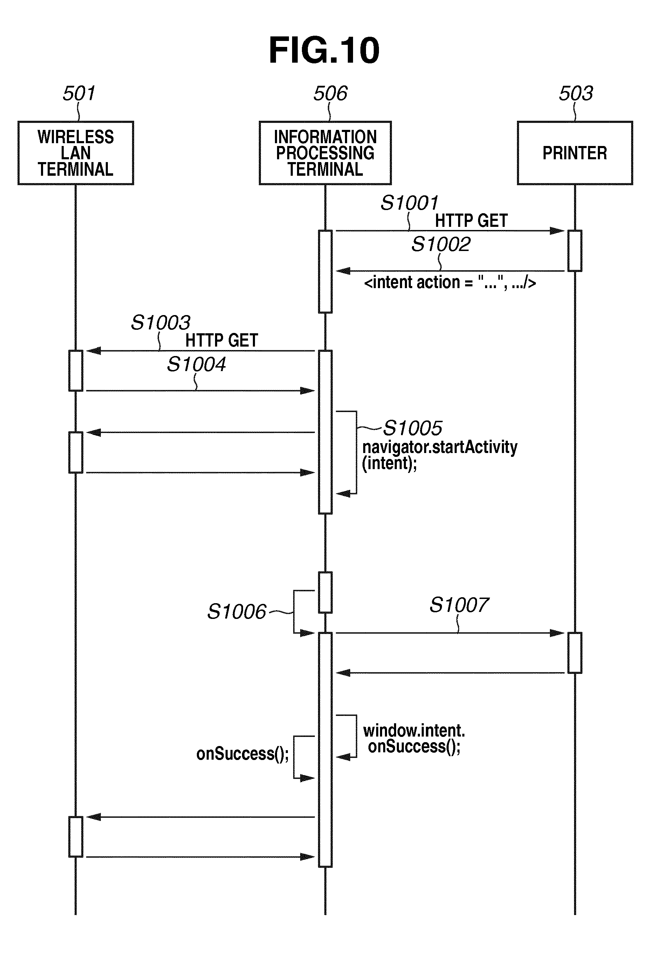

Fig. 10 is a sequence diagram specifically illustrating a flow of processing using Web Intents according to the first exemplary embodiment. The processing unique to the sequence diagram illustrated in Fig. 10 will be described specifically as there is the processing similar to that of the basic Web Intents sequence illustrated in Fig. 2.

In step S1001, the information processing terminal 506 accesses the printer 503 as an example of the peripheral device serving as the Web Intents service by using a browser functioning as the UA. In step S1002, the information processing terminal 506 receives the HTML information including the Web Intents service information, and display control of the browser is executed based on the HTML information.

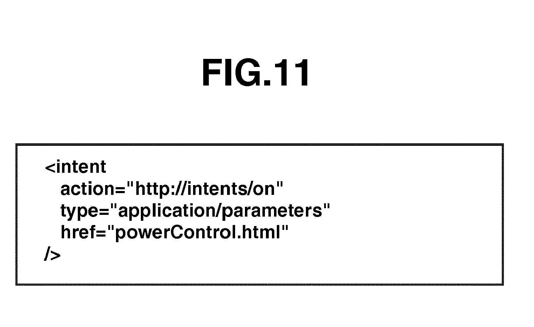

Fig. 11 is a diagram illustrating an example of the HTML information including the Web Intents service information. In the example illustrated in Fig. 11, a tag <intent> which indicates "action" as "ON (power ON)" and "type" as "parameter" is included as the Web Intents service information.

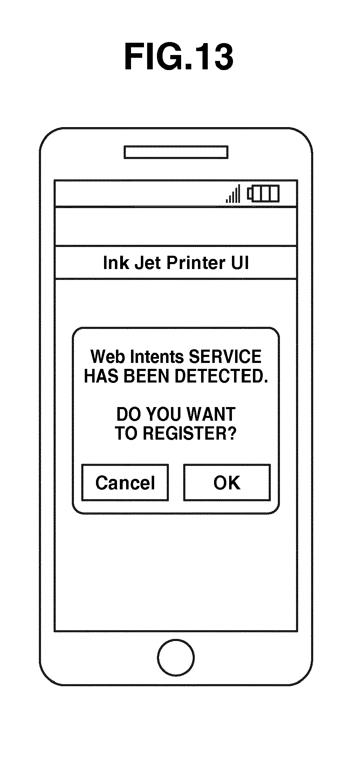

According to the received HTML information including the tag <intent>, the browser of the information processing terminal 506 notifies the user by a message illustrated in Fig. 13 to confirm whether to register the Web Intents service information on the service information storage unit 908. If the user provides an instruction for executing the registration (i.e., select "OK") through the user input-output unit 905 of the information processing terminal 506, the user can use the Web Intents service for turning ON the power of the printer 503 through the information processing terminal 506.

Next, in step S1003, the information processing terminal 506 accesses the wireless LAN terminal 501 corresponding to the Web Intents client by using the browser. In step S1004, the information processing terminal 506 receives the HTML information including the ECMAScript.

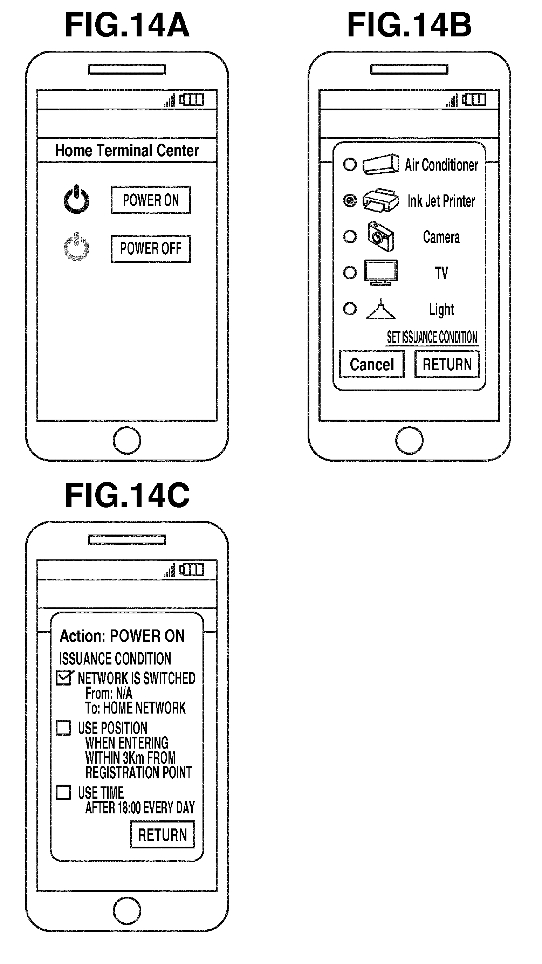

Fig. 14A is a diagram illustrating a screen provided by the Web Intents client for executing power control, which is displayed on the information processing terminal 506 in response to a reception of the HTML information. The operation category displayed on the screen provided by the Web Intents client may be "share", "display", or "save" in addition to "power ON" illustrated in Fig. 14A. The category displayed on the screen corresponds to each action defined by the Web Intents service information.

In step S1005, when the user presses the "power ON" button on the screen illustrated in Fig. 14A, the information processing terminal 506 executes the received ECMAScript. The information processing terminal 506 acquires one or more service information defining "action" and "type" which match with the values of "action" and "type" described in the ECMAScript from the service information registered on the service information storage unit 908, and provides the acquired service information to the user as illustrated in Fig. 14B. A list of the Web Intents services for realizing the above-described "power On" operation already registered on the UA will be displayed as illustrated in Fig. 14B. The list illustrated in Fig. 14B is displayed based on the information included in "title" of the service information, and icons of the network peripheral devices which provide the Web Intents services are also displayed in order to make the display easier to understand.

Further, a setting item "Set Issuance Condition" is provided on the screen illustrated in Fig. 14B, so that the user can flexibly designate the issuance condition of the Web Intents request.

Fig. 14C is a setting screen displayed on the browser when a button "Set Issuance Condition" on the screen illustrated in Fig. 14B is pressed by the user.

On the screen illustrated in Fig. 14C, an issuance condition, for issuing the request by detecting that the participating network of the information processing terminal 506 is switched from the network provided by the mobile carrier or other network outside to the home network, is selected and set. In addition, an issuance condition, for issuing the request by detecting that the information processing terminal 506 has re-entered an area within 3km from the registration point after moving out of the area for a distance of 3km or more, and an issuance condition, for issuing the request every day at a particular time are provided as other issuance conditions. The user can select the issuance condition as appropriate.

The issuance condition of the Web Intents request may be provided to the user from the UA, such as the browser of the information processing terminal 506, as a selection function of the issuance condition. Further, the content of the provided issuance condition may be newly created or edited by the user.

In a case where the UA, such as the browser of the information processing terminal 506, includes a selection function of the issuance condition, the OS may issue the request by detecting an event as the issuance condition. In addition, the browser that is constantly executed in the background may control the issuance condition to issue the Web Intents request by acquiring the external environment information, such as a switching event of the network, from the operating system.

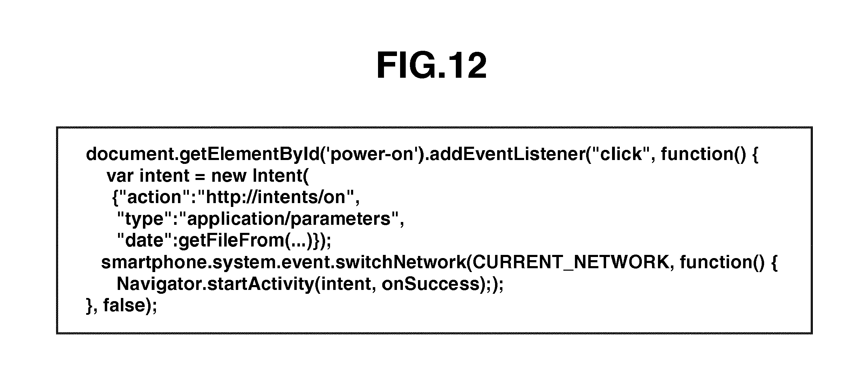

Further, the issuance condition of the Web Intents request may be defined by the ECMAScript issued by the Web Intents client. As illustrated in Fig. 12, in a case where the issuance condition is defined by the ECMAScript, a condition, for example, a switching event of the network is received from the system, may be included as an execution condition of "startActivity" in "intent".

After the issuance condition of the Web Intents request is determined, the user determines an issuance target service on the screen illustrated in Fig. 14B. As illustrated in Fig. 14B, "Ink Jet Printer" included in "title" of the service information provided by the printer 503 is selected as the issuance target.

After the Web Intents request having the issuance condition is created, the information processing terminal 506 waits until the issuance condition is satisfied. In step S1006, the information processing terminal 506 detects that the issuance condition is satisfied. Then, in step S1007, the information processing terminal 506 issues the request to the printer 503. The request is the same as the request transmitted in step S207 illustrated in Fig. 2.

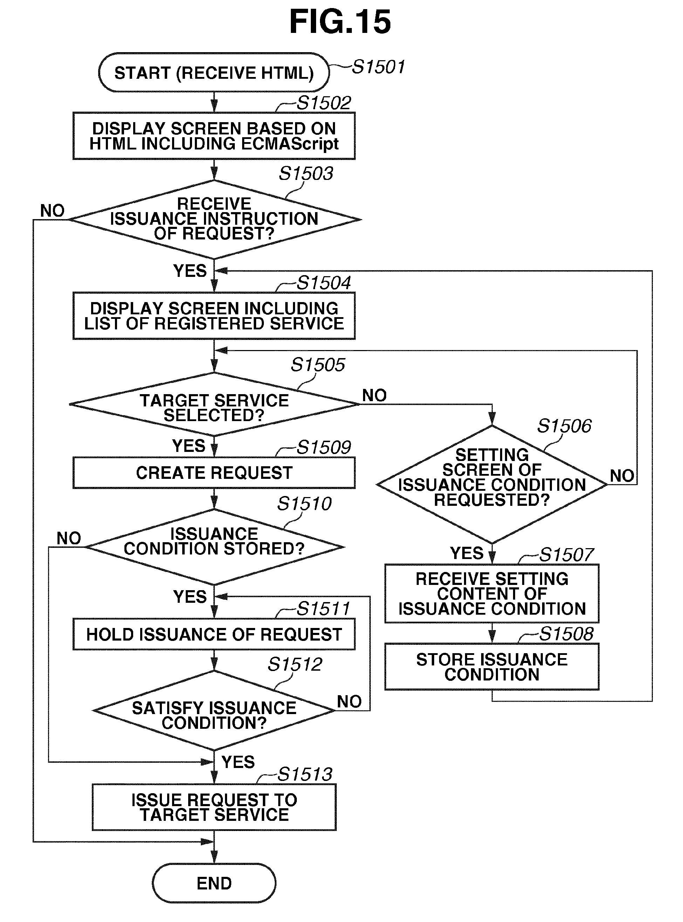

Fig. 15 is a flowchart illustrating processing for executing the service according to the issuance condition executed by the information processing terminal 506 by using the Web Intents system. The program according to each step of processing included in the flowchart is stored in any of the ROM 803 and the storage unit 809 illustrated in Fig. 8, developed on the RAM 804 as necessary, and executed by the CPU 802.

In step S1501, the processing is started when the network control unit 903 receives the HTML information including the ECMAScript for issuing the Web Intents request from the Web Intents client, after the program (i.e., web browser or OS) serving as the UA has been activated.

In step S1502, the processing control unit 904 configures a screen based on the received HTML information, and executes display control of the screen as illustrated in Fig. 14A via the user input-output unit 905. In step S1503, the processing control unit 904 determines whether an issuance instruction of the Web Intents request based on the screen operation of the user is received. In a case where the issuance instruction of the Web Intents request is not received (NO in step S1503), the processing control unit 904 ends the processing. In this case, the screen based on the received HTML information will be continuously displayed on the web browser as usual. In step S1503, in a case where the issuance instruction of the Web Intents request is received (YES in step S1503), the processing proceeds to step S1504.

In step S1504, the processing control unit 904 executes display control, which is performed through the user input-output unit 905, of a list of the Web Intents services as illustrated in Fig. 14B. In order to display the list, the processing control unit 904 inquires of the service information input-output unit 907 about registration of the corresponding Web Intents services based on attribute information, such as a type of target data of the service. If the corresponding Web Intents services are registered, the above list will be displayed.

In step S1505, the processing control unit 904 determines whether the user has operated the screen to select the desired Web Intents service (i.e., target service) from the displayed list. If the target service is selected (YES in step S1505), the processing proceeds to step S1509. If the target service is not selected (NO in step S1505), the processing proceeds to step S1506.

In step S1506, the processing control unit 904 determines whether the user operates the screen to request a setting screen for the issuance condition of the Web Intents request. If the setting screen for the issuance condition is requested (YES in step S1506), the processing proceeds to step S1507. If the setting screen for the issuance condition is not requested (NO in step S1506), the processing returns to step S1505.

In step S1507, the processing control unit 904 displays the screen illustrated in Fig. 14C and receives the setting for the issuance condition of the Web Intents request from the user via the user input-output unit 905. In step S1508, the processing control unit 904 stores the issuance condition received in step S1507 in a predetermined storage unit, such as the RAM 804 or the storage unit 809. After the issuance condition is stored, the processing returns to step S1504. Then, the processing control unit 904 displays the list again.

In step S1509, based on the content of the ECMAScript received from the Web Intents client, the processing control unit 904 creates a Web Intents request to the target service selected by the user. In a case where the issuance condition is designated by the user, the Web Intents request is stored in a predetermined storage unit temporarily.

In step S1510, the processing control unit 904 determines whether the issuance condition of the Web Intents request is stored. If the issuance condition is stored (YES in step S1510), the processing proceeds to step S1511. If the issuance condition is not stored (NO in step S1510), the processing proceeds to step S1513.

In step S1511, the processing control unit 904 holds the issuance of the Web Intents request according to the issuance condition. In step S1512, the processing control unit 904 determines whether the issuance condition is satisfied. If the processing control unit 904 determines that the issuance condition is satisfied (YES in step S1512), the processing proceeds to step S1513. If the processing control unit 904 determines that the issuance condition is not satisfied (NO in step S1512), the processing returns to step S1511. For example, switching of the network used by the information processing terminal 506 (i.e., participating network) from one to another is set as the issuance condition, the processing control unit 904 determines whether the issuance condition is satisfied by detecting whether the information processing terminal 506 is connected to the network that satisfies the issuance condition.

In step S1513, the processing control unit 904 issues the Web Intents request created in step S1509 to the target service selected by the user. Thereafter, the processing control unit 904 executes the rest of the processing of the ECMAScript and ends the processing.

In steps S1505 through S1508, the user has selected the target service after setting the issuance condition. However, the user may set the issuance condition after selecting the target service. Further, with respect to the Web Intents service, the user may set the issuance condition by selecting the issuance condition from several candidates previously registered on the above-described storage unit.

Furthermore, if the issuance condition is not set by the processing in steps S1506 through S1508, a condition, for example, issuing the request immediately, may be stored as the issuance condition.

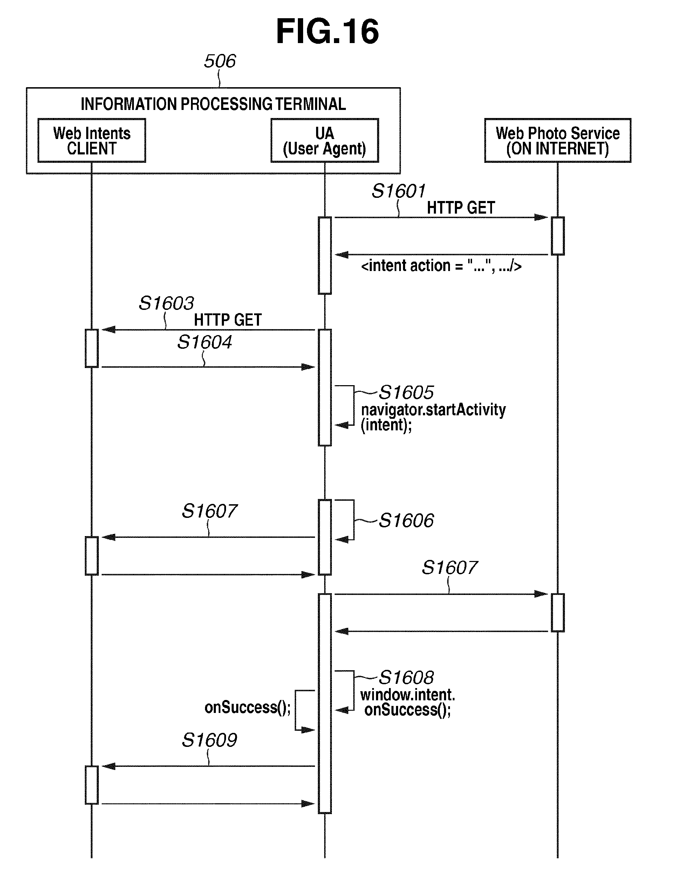

Fig. 16 is a sequence diagram specifically illustrating a flow of processing using Web Intents according to a second exemplary embodiment. The processing unique to the sequence diagram of Fig. 16 will be described specifically as there is the processing similar to that of the basic Web Intents sequence illustrated in Fig. 2.

In this sequence, the information processing terminal 506 functions as the Web Intents client as well as the UA. Specifically, the OS operating on the information processing terminal 506 also includes the function of the UA, and a photo service application (hereinafter, referred to as "local photo service") executed by the information processing terminal 506 includes the function of the Web Intents client. The OS includes a function corresponding to the web browser operating as the UA in the first exemplary embodiment. Therefore, the OS can access the Web Intents service existing in the network. In the present exemplary embodiment, the UA function of the OS has a module configuration similar to that illustrated in Fig. 9 of the first exemplary embodiment. The local photo service is an application which stores data, such as an image captured by a camera included in the information processing terminal 506 or an image downloaded from the network, and provides the stored data to the user.

In step S1601, the UA function accesses the web photo service functioning as the Web Intents service on the internet. The web photo service is a service for sharing image data on the internet, so that various users can upload and share photographic data with other users or friends. The web photo service is provided by the server existing in the internet. Then, the UA function receives the HTML information including the Web Intents service information as a response from the web photo service. The UA function provides the user with a display screen based on the HTML information. For example, in a case where the user accesses the site of the web photo service for the first time, the display screen of the UA function displays a notification on as to whether the user would like to register the Web Intents service provided by the web photo service on the UA. In a case where the UA function receives an instruction for the registration through the screen operation of the user, the UA function stores the service information relating to the Web Intents service provided by the web photo service in the service information storage unit 908.

This service information includes the information, such as "save" as "action", and "* (image data in any format)" as "type". This service information realizes the web service in which data in any format provided from the Web Intents client is saved in a user data storage region provided by the web photo service.

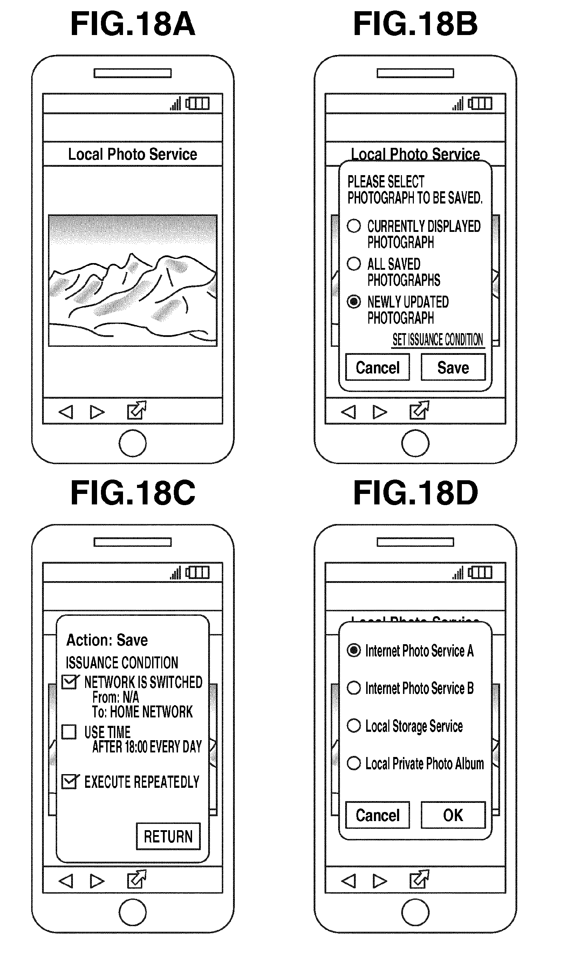

In step S1603, the UA function accesses the Web Intents client function of the local photo service. The UA function of the OS can also access the application operating on the same terminal by using the HTTP and the HTML. For example, in a case where the UA function accesses the local photo service, the saved photographic data is displayed to the user through the screen illustrated in Fig. 18A.

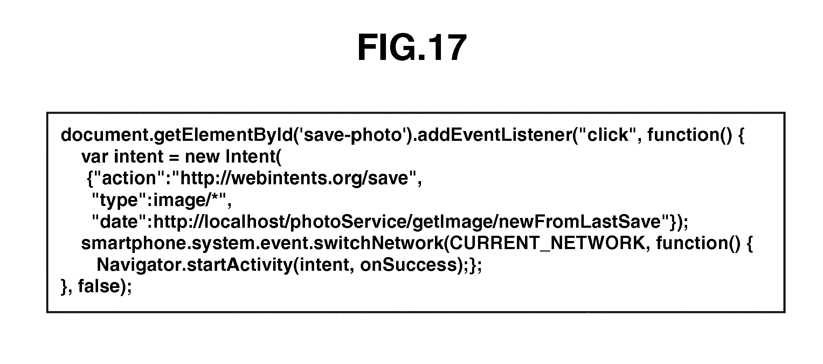

In step S1604, the processing control unit 904 of the UA function receives the HTML information including the ECMAScript (see Fig. 17) from the local photo service operating as the Web Intents client. Fig. 17 is a diagram illustrating an example of the script which does not specify the content that should be previously determined by the Web Intents request.

Normally, with respect to a certain photographic data, an action service, such as "save" or "share", is executed by the following procedure.
1. The user designates photographic data as a target content.
2. The user designates an action category (i.e., the user presses a sharing button on the screen provided by the Web Intents client).
3. The user determines a target service from a list of services corresponding to the designated action category.
4. The Web Intents request is promptly issued to the target service.

However, in the present exemplary embodiment, the service is executed by the following procedure.
1. The user designates a determination condition for determining data as a target Web Intents service.
2. The user designates an issuance condition of a Web Intents request.
3. The user further determines a target service from a list of services corresponding to an action category designated by the user.
4. The Web Intents request is issued to the target service according to the determination condition and the issuance condition.

In step S1605, the UA function receives the above-described designation of the determination condition and the issuance condition, and stores these designated conditions in a predetermined storage unit, such as the RAM 804 or the storage unit 809 of the information processing terminal 506. The UA function refers to the conditions to control the Web Intents request.

For example, "currently displayed photograph", "all saved photographs", "newly updated photograph", and "newly added photograph" are the determination conditions for determining data that is to be a target Web Intents service. Fig. 18B is a diagram illustrating an example of the setting screen of the determination condition displayed on the user input-output unit 905. In addition, the issuance condition can be also set via the screen illustrated in Fig. 18C. In step S1605, the UA function receives the designation of the target Web Intents service via the screen illustrated in Fig. 18D.

In step S1606, the UA function of the OS determines whether a condition, for example, change in the network environment, satisfies the issuance condition. If the condition satisfies the issuance condition, in step S1607, the UA function of the OS requests a content (i.e., photographic data) that satisfies the above determination condition to the local photo service serving as the Web Intents client, and acquires the content therefrom. In step S1607, the UA function of the OS issues a request to the Web Intents service provided by the web photo service by using the acquired photographic data. Then, the UA function of the OS receives a response including an execution result of the service with respect to the photographic data.

In steps S1608 and S1609, the UA function of the OS displays the content and the execution result of the service, and also returns the execution result of the service to the Web Intents client.

According to the present exemplary embodiment, the user does not have to designate the issuance condition of the Web Intents request. In a case where the issuance condition is not designated, a request for the Web Intents service using the content which satisfies the above-described determination condition will be issued instantaneously.

According to the first and the second exemplary embodiments, power control and an image data sharing function of a device via the network have been described as examples of the Web Intents service.

However, in addition to the above, a network printing service, a network e-mail service, and a network data editing service are also provided as the Web Intents services, and thus the present invention is also applicable to those services.

According to the first and the second exemplary embodiments, change in the network environment or date/time designation of the information processing terminal including the UA function have been described as examples of the issuance condition of the Web Intents request.

However, as the issuance condition, a power state of the information processing terminal (e.g., the request is issued when the power is turned ON), an operation state of the application (e.g., the request is issued when the application of the UA function is activated), or an operation state of the Web Intents service may be designated. Further, the issuance condition may be designated by combining a plurality of conditions.

Furthermore, the present invention also includes a system and a function which are configured by appropriately combining the above described exemplary embodiments.

Embodiments of the present invention can also be realized by a computer of a system or apparatus that reads out and executes computer executable instructions recorded on a storage medium (e.g., non-transitory computer-readable storage medium) to perform the functions of one or more of the above-described embodiment(s) of the present invention, and by a method performed by the computer of the system or apparatus by, for example, reading out and executing the computer executable instructions from the storage medium to perform the functions of one or more of the above-described embodiment(s). The computer may comprise one or more of a central processing unit (CPU), micro processing unit (MPU), or other circuitry, and may include a network of separate computers or separate computer processors. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An information processing terminal (506) including a relay function (106) for relaying a client (101) which manages data and a service (103) which provides a function by using the data managed by the client (101), the information processing terminal (506) comprising:
a registration means configured to register function information, in the relay function (106), for calling a function provided by the service (103);
a first receiving means (904) configured to receive a designation of the registered function information;
a storage means (904) configured to create and store a request (S1509) with respect to the service (103) of a function corresponding to the designation of function information received by the first receiving means;
a second receiving means (904) configured to receive a designation of at least any of a determination condition (Fig. 18B) for determining data to be a target of a function provided by the service (103) and an issuance condition (Fig. 14C, 18C) for issuing a request to the service (103); and
an issuance means (904)configured to issue the stored request according to the designation of condition received by the second receiving means.

2. The information processing terminal (506) according to claim 1,
wherein the client (101) and the service (103) execute communication with each other via a network by using the relay function (106).

3. The information processing terminal (506) according to claim 2,
wherein the network is an internet (505).

4. The information processing terminal (506) according to any one of claims 1 to 3,
wherein the client (101) and the relay function (106) are functions operating on the information processing terminal (506).

5. The information processing terminal (506) according to any one of claims 1 to 4,
wherein the function information registered by the registration means includes information indicating a category of a provided function, a type of data that can be processed by the provided function, information indicating a connection destination of the provided function, and information indicating a title of the provided function.

6. The information processing terminal (506) according to any one of claims 1 to 5, further comprising:
an acquisition means configured to acquire, in a case where the second receiving means receives the designation of a determination condition (Fig. 18B), data which satisfies the determination condition (Fig. 18B) from the client (101);
wherein the issuance means issues the stored request by using the acquired data.

7. The information processing terminal (506) according to any one of claims 1 to 6,
wherein the designation of a condition using a network environment is executed as the issuance condition (Fig. 14C, 18C).

8. The information processing terminal (506) according to any one of claims 1 to 6,
wherein the designation of a condition using at least any of a position of the information processing terminal (506), a state of the information processing terminal (506), a state of an application of the information processing terminal (506), and a state of the service (103) is executed as the issuance condition (Fig. 14C, 18C).

9. The information processing terminal (506) according to any one of claims 1 to 8,
wherein the function provided by the service (103) is at least any of functions of power control of a device, data sharing, printing service, e-mail service, and data editing service through the network.

10. A method for an information processing terminal (506) including a relay function (106) for relaying a client (101) which manages data and a service (103) which provides a function by using the data managed by the client (101), the method comprising:
registering function information, in the relay function (106), for calling a function provided by the service (103);
receiving, as a first receiving, designation of the registered function information;
creating and storing a request to the service (103) of a function corresponding to the designation of the function information received as the first receiving;
receiving, as a second receiving, designation of at least any of a determination condition for determining data to be a target of a function provided by the service (103) and an issuance condition for issuing a request to the service (103); and
issuing the stored request according to designation of the condition received as the second receiving.

11. The method according to claim 10,
wherein the client (101) and the service (103) execute communication with each other via a network by using the relay function (106).

12. The method according to any one of claims 10 and 11,
wherein the client (101) and the relay function (106) are functions operating on the information processing terminal (506).

13. The method according to any one of claims 10 to 12, further comprising:
acquiring, in a case where the designation of a determination condition is received, data which satisfies the determination condition from the client (101);
wherein the issuing issues the stored request by using the acquired data.

14. The method according to any one of claims 10 to 13,
wherein the designation of condition using a network environment is executed as the issuance condition.

15. The method according to any one of claims 10 to 13,
wherein the designation of condition using at least any of a position of the information processing terminal (506), a state of the information processing terminal (506), a state of an application of the information processing terminal (506), and a state of the service (103) is executed as the issuance condition.

16. The method according to any one of claims 10 to 15,
wherein the function provided by the service (103) is at least any of functions of power control of an apparatus, data sharing, printing service, e-mail service, and data editing service via a network.

17. A computer executable program for executing a method for an information processing terminal (506) according to any one of claims 10 to 16.

18. A computer readable storage medium for storing a computer executable program for executing a method for an information processing terminal (506) according to claim 17.
